# FASCICULE DE BREVET EUROPEEN

(11) **EP 2 943 330 B1**
(45) Date de publication et mention de la délivrance du brevet: **26.10.2016**
(21) Numéro de dépôt: 14703121.5
(22) Date de dépôt: 09.01.2014
(51) Int. Cl.: B29C 70/88, B29C 70/30, B29C 70/22, B32B 37/18, B32B 3/26, B29B 11/16

(54) **PIÈCE STRUCTURALE EN MATÉRIAU COMPOSITE RENFORCÉE**
VERSTÄRKTES STRUKTURTEIL AUS VERBUNDSTOFF
REINFORCED STRUCTURAL COMPONENT MADE OF COMPOSITE MATERIAL

(30) Priorité: 11.01.2013 FR 1350284
(43) Date de publication de la demande: 18.11.2015
(73) Titulaire: Aircelle, 76700 Gonfreville L'Orcher (FR)
(72) Inventeur: DESJOYEAUX, Bertrand, F-76310 Sainte Adresse (FR); DUNLEAVY, Patrick, F-91120 Palaiseau (FR)
(74) Mandataire: Gaillarde, Frédéric F. Ch.
(86) Numéro de dépôt international: PCT/FR2014/050033
(87) Numéro de publication internationale: WO 2014/108640

(56) Documents cités:
- WO-A1-97/20092
- DE-A1-102007 017 446
- FR-A1- 2 951 400
- FR-A1- 2 953 160
- GB-A- 2 168 032

## Description

La présente invention se rapporte au domaine de la fabrication des pièces structurales en matériau composite, notamment pour l'aéronautique.

La présente invention concerne, plus particulièrement, une pièce structurale en matériau composite percée d'un ou plusieurs orifices ainsi qu'un procédé de réalisation d'une telle pièce structurale.

Comme cela est connu en soi, on peut réaliser des pièces en matériaux composites à partir de stratifiés constitués d'un empilement de plis, chaque pli comportant des fibres longues s'étendant sensiblement parallèlement les unes aux autres ou tissés croisées entre elles.

L'intérêt principal de ce type de matériau réside dans la possibilité d'optimiser leurs propriétés mécaniques aux sollicitations.

En effet, l'orientation spécifique des fibres peut être défini par rapport à la direction des sollicitations locales dans les pièces.

Les propriétés mécaniques du stratifié sont, ainsi, directement liées à la séquence des différents plis de fibres étendues et des orientations des fibres dans l'empilement. On utilise ainsi pour ces plis étendus soit des nappes de fibres unidirectionnelles, soit des tissus bidirectionnels, soit des matériaux dits multiaxiaux, ou des tissus multicouches 3D ou interlocks.

Dès lors, le matériau peut être défini pour tenir au mieux les sollicitations auquelles il est destiné.

Ces structures en matériau composite sont obtenues par des techniques de drapage de fibres sèches ou pré-imprégnées que l'on consolide par imprégnation et polymérisation de résine.

Dans ces pièces structurales, des orifices peuvent être formés, notamment pour faire passer un axe permettant l'assemblage de plusieurs pièces afin de transmettre des efforts.

On peut citer, notamment, l'exemple de chapes de bielles en matériau composite qui comportent des orifices destinés à recevoir un axe.

Or, la présence d'orifices engendre des concentrations de contraintes dues à l'insertion de l'axe dans les orifices qui nécessitent de renforcer localement les pièces structurales autour de leurs orifices.

Une solution consiste à réaliser un renforcement par une augmentation de l'épaisseur de la structure autour du trou, en réalisant un empilement de plis disposés alternativement dans diverses directions. Par exemple, on alterne des couches de fibres dans 4 directions angulées de 45° les unes par rapport aux autres, ou on empile sucessivement des couches de tissus bidirectionnels ayant des directions à 0° et 90° d'une part et +/-45° d'autre part. Dans un tel cas, on peut obtenir une pièce dont le stratifié, comporte autant de fibres dans chacune des 4 direction, dès lors que l'on prend en considération un nombre de couches de plis suffisants. Le ratio de chacune des 4 directions est de 25% ou un ratio approché. On obtient ainsi un stratifié dit 'quasi-isotrope', c'est-à-dire ayant des propriétés sensiblement identiques dans toutes les directions radiales autour du trou, ce qui donne une capacité en matage équivalente dans chaque direction radiale autour du trou.

Cette solution conduit à augmenter très significativement l'épaisseur autour du trou et est donc pénalisante en terme de masse. Cette solution nécessite également un ligament de grande dimension pour tenir une chape.

Une autre solution consiste alors à renforcer le contour du ligament avec des fibres principalement unidirectionnelles cerclées autour de la zone de trou pour constituer le ligament périphérique. Cette solution offre une très bonne tenue en traction grâce à ces fibres périphériques, mais n'apporte aucune amélioration en cas de compression sur le bord de trou du côté opposé au ligament. De plus la liaison d'interface entre les empilements de couches de fibres en bord de trou et les fibres en cerclage, introduit une forte discontinuité de structure qui peut être insuffisante.

Une autre solution consiste alors à broder autour du trou une mèche en carbone, avec une couture en zig-zag.

Cette solution n'est toutefois pas satisfaisante notamment du point de vue de la masse : on constate qu'un certain nombre de fils utilisés autour du trou sont en fait inutiles au regard des efforts à transmettre et pénalisent indûment le poids de la pièce concernée.

Par ailleurs, cette technique est relativement lente à produire en comparaison avec des techniques de tissage.

On connaît aussi les documents FR2951400 et WO97/20092 qui traitent de pièces structurales en matériau composite comprenant un ou plusieurs orifices d'assemblage, les pièces structurales étant composées d'un empilement de plis de fibres comprenant au moins une couche de plis de fibres.

Le document FR 2 951 400 divulgue par ailleurs une pièce structurale conformément au préambule de la revendication 1. Un but de la présente invention est de proposer une pièce structurale en matériau composite présentant un orifice remédiant aux inconvénients susmentionnés.

Un autre but de la présente invention est de proposer une pièce structurale en matériau composite dans laquelle la tenue mécanique de la zone voisine de l'orifice est optimisée tout en offrant une masse optimisée et une épaisseur minimale de cette zone .

Il est également désirable d'améliorer la tenue de matage dans les pièces structurales présentant un orifice d'assemblage réduisant les risques de délaminage au bord de l'orifice.

Un autre but de la présente invention est de proposer une pièce structurale présentant un orifice d'assemblage dont la tenue de ligament est améliorée.

A cet effet, l'invention propose une pièce structurale en matériau composite selon la revendication 1, comprenant au moins un orifice d'assemblage, ladite pièce étant composée d'un empilement de plis de fibres courantes comprenant au moins une couche de plis de fibres unidirectionnelles orientées ou au moins une couche de tissu ou de tresse orienté s'étendant à la pièce au-delà de la zone périphérique à l'orifice, et au moins un pli de renfort autour de l'orifice.

Cette pièce est remarquable en ce que le pli de renfort est composé d'une préforme textile composite tissée formée d'une armure obtenue par l'assemblage de plusieurs fibres de chaîne circonférentielles décrivant une trajectoire autour dudit orifice d'assemblage et de fibres de trame s'étendant radialement par rapport au centre dudit orifice.

Grâce à la présente invention, la présence d'un renfort local au niveau des orifices d'une pièce structurale formée d'une préforme tissée améliore la tenue de matage autour du trou, et améliore la tenue de ligament de la pièce concernée tout en limitant la masse de cette pièce renforcée.

On répond, dès lors, de façon optimale aux sollicitations de service notamment lors de la transmission d'efforts des pièces en matériau composite au niveau de leurs orifices.

Suivant d'autres caractéristiques optionnelles de l'invention, prises seules ou en combinaison :
- la préforme textile du renfort composite tissé décrit une trajectoire spirale ou annulaire, ladite spirale ou ledit anneau respectivement étant sensiblement concentrique par rapport au centre dudit orifice ;
- la préforme textile du renfort composite tissé est formée d'une armure obtenue par l'assemblage de plusieurs fibres de chaîne décrivant la trajectoire annulaire ou spirale et de fibres de trame s'étendant radialement par rapport au centre dudit orifice ;
- la densité de fibres de chaînes et/ou le titre des fibres de chaînes du pli de renfort sont réguliers entre les diamètres intérieur et extérieur de la préforme textile tissée ;
- la densité de fibres de chaînes et/ou le titre des fibres de chaînes du pli de renfort peuvent être variables entre les diamètres intérieur et extérieur de la préforme textile tissée ;
- le titre des fibres de trames et/ou le pas polaire des fibres de trame du pli de renfort sont constants sur la circonférence de la préforme textile tissée ;
- le titre des fibres de trames et/ou le pas polaire des fibres de trame du pli de renfort peuvent être variables sur la circonférence de la préforme textile tissée ;
- la densité de fibres de chaînes de la préforme textile tissée est constante ou évolue suivant différentes orientations angulaires autour de l'orifice;
- au moins un pli de renfort est agencé sur l'épaisseur de la pièce structurale entre deux couches de plis de fibres courantes constituant la structure courante de la pièce ;
- un ou plusieurs plis de renfort sont agencés sur l'épaisseur de la pièce structurale sur une ou plusieurs couches de plis de fibres courantes, formant les faces externe et/ou interne de l'empilement ;
- les plis de renfort agencés sur l'épaisseur de la pièce structurale sont identiques ou différents ;
- l'étendue des plis de renfort est différente d'une couche à l'autre offrant une évolution progressive de l'épaisseur de la pièce autour du trou;
- au moins une préforme textile tissée formant un pli de renfort comprend un orifice destiné à être placé au droit de l'orifice d'assemblage de la pièce ;
- le drapage de l'ensemble de la pièce incluant la zone de l'orifice est constitué d'au moins un pli de fibres courant constitué d'un au moins des types tels que couches de fibres unidirectionnelles, couches de tissus bidirectionnels, couches de fibres assemblées multiaxiales, structures tissées interlock localement déliées ou non autour du trou et au moins un pli de renfort ;
- au moins une partie de l'empilement des plis de renfort et des couches de fibres de la pièce, est renforcée par des renforts en Z ;
- les fibres constituant les plis de renfort et les couches de fibres de la pièce et les renforts en Z sont pris parmi les fibres de carbone, les fibres de verre, les fibres de kevlar, d'un seul type ou en combinaisons ;
- la pièce forme au moins une chape comportant un orifice destiné à l'assemblage par insertion d'un axe ou une fixation.

L'invention concerne en outre un procédé de réalisation d'une pièce structurale en matériau composite, conformément à la revendication 15, comprenant au moins un orifice d'assemblage telle que précitée.

Ce procédé comprend une étape de drapage d'un empilement de plis de fibres et une étape de consolidation de l'empilement visant à solidariser les fibres des différents plis par polymérisation d'une résine pour obtenir ladite pièce.

Pendant l'étape de drapage de l'empilement de plis, on dépose au moins une couche de plis de fibres courantes, c'est-à-dire s'étendant à la pièce au-delà de la zone de périphérie immédiate de l'orifice et au moins un pli de renfort composé d'une préforme textile tissée formée d'une armure obtenue par l'assemblage de plusieurs fibres de chaîne circonférentielles décrivant une trajectoire autour dudit orifice d'assemblage et de fibres de trame s'étendant radialement par rapport au centre dudit orifice.

D'autres caractéristiques et avantages de la présente invention apparaîtront à la lumière de la description qui va suivre, et à l'examen des figures ci-annexées, dans lesquelles :
- la figure 1 est une représentation schématique en perspective d'un empilement de couches de fibres courantes et de couches de renforts formant une pièce structurale en matériau composite renforcée selon un premier mode de réalisation de la présente invention ;
- les figures 2a et 2b illustrent deux étapes successives d'un procédé de fabrication d'une pièce renforcée de la figure 1;
- la figure 3 est une vue de face de la pièce obtenue à la figure 2b dans laquelle on rend visible l'orientation des fibres ;
- la figure 4a est une vue représentative d'un tissage partiel d'un pli de renfort;
- la figure 4b est une vue de face d'un pli de renfort tissé selon un premier mode de réalisation ;
- les figures 5a et 5b illustrent deux variantes de réalisation de tissage d'un pli de renfort ;
- les figures 6a et 6b illustrent deux autres variantes de réalisation de tissage du pli de renfort;
- la figure 7 illustre une autre variante de réalisation du tissage du pli de renfort ;
- Les figures 8a, 8b, 8c, et 8d sont des vues en coupes dans l'épaisseur montrant différents agencements des plis de renforts dans un empilement de plis courants d'une pièce selon l'invention
- les figures 9a à 9d sont des vues en perspective de parties de pièces comportant un orifice qui peut être renforcé selon l'invention,

Sur l'ensemble de ces figures, des références identiques ou analogues désignent des organes ou ensembles d'organes identiques ou analogues.

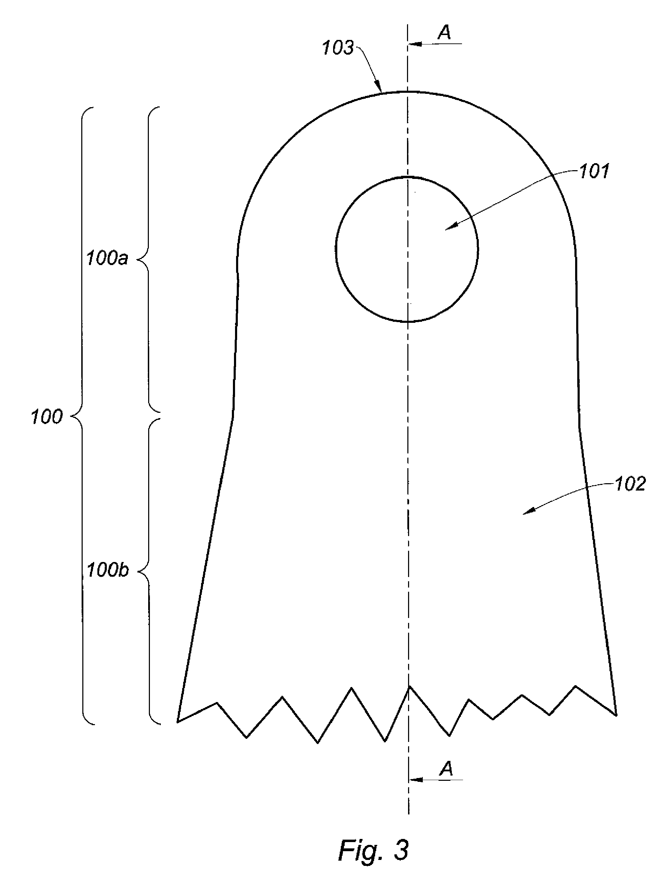

En référence à la figure 3, on observe une pièce structurale en matériau composite selon l'invention sous forme d'une pièce 100 comportant une zone courante 100a et une zone de chape 100b entourant un orifice 101.

Cet orifice 101 permet, notamment, l'assemblage de la pièce 100 avec des éléments adjacents, tel que par exemple la mise en place d'un axe pivot dans l'orifice 101.

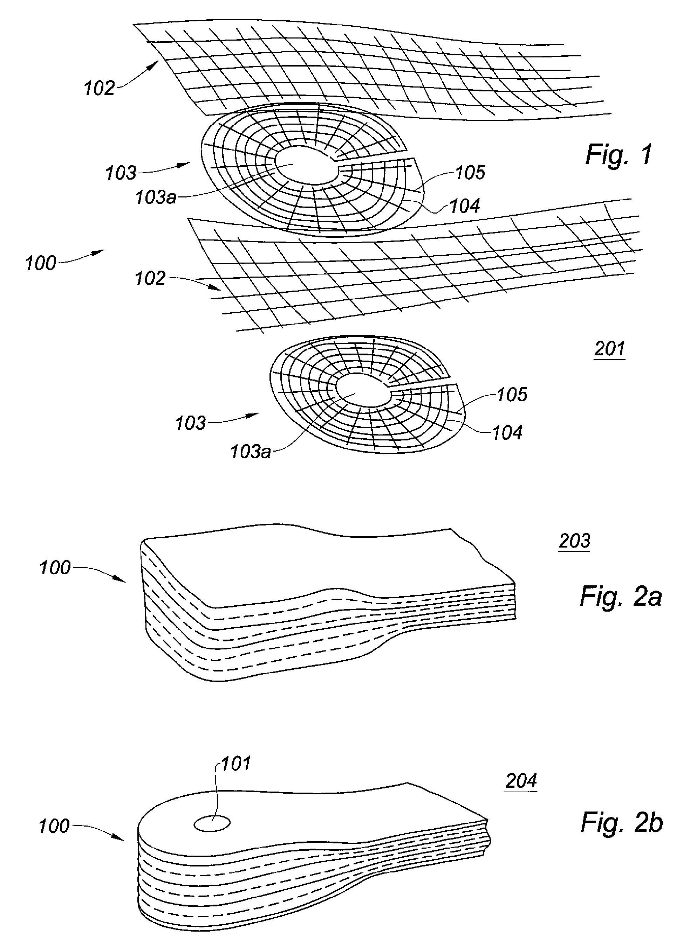

Cette pièce structurale en matériau composite 100 selon l'invention est composée d'un empilement de fibres comprenant au moins une couche 102 de plis de fibres courantes s'étendant au-delà de la zone de tour de l'orifice pour draper une plus grande partie de la pièce ou sa totalité et au moins un pli de renfort 103, comme illustré plus particulièrement sur la figure 1.

Sur la figure 1, est représenté en perspective, une séquence d'empilement de couches de fibres selon un mode de réalisation de la présente invention. L'empilement de plis est composé, à titre d'exemple non limitatif, de couches de plis de fibres courantes 102, et de plis de renfort locaux 103, agencés de manière alternés dans l'épaisseur de la pièce structurale de sorte à redistribuer de façon optimale les efforts entre la zone périphérique à l'orifice et la zone courante de la pièce.

On entend par couche 102 de plis de fibres courantes un ensemble de fibres liées entre elles selon une organisation planaire ou surfacique, et répondant à une architecture d'assemblage connue sous différentes appellations telles que nappe unidirectionnelle, tissu 2D, multiaxial, tissu multicouches, tresses ou tout autre mode de tissage .

Une nappe unidirectionnelle est un assemblage de fibres toutes parallèles entre elles.

Un tissu 2D est un assemblage tissé de fibres dans au moins deux directions. On parle généralement de tissu 2D chaînes et trames, les quelles sont entrelacées selon différents motifs tels que toile, taffetas, sergé, satin.

Un tissu multiaxial, est un assemblage de multiples nappes de fibres unidirectionnelles empilées sucessivement suivant différentes directions , les nappes sont liées entre elles par des coutures périodiques à travers l'épaisseur. On trouve ainsi souvent des multiaxiaux, bidirectionnels encore appelés bibiais quand les deux couches constitutives sont disposés à des angles positifs et négatifs de part et d'autre de l'axe longitudinal du matériau. On trouve également de triaxiaux ou quadriaxiaux.

Un tissu multicouche ou tissu interlock, est un tissu comportant au moins 2 couches de chaînes ou 2 couches de trames, lesquelles sont entrelacées de façon à ce que tout l'ensemble des fibres tissées constituent un matériau lié.

Une tresse est un matériau obtenu par tressage de fibres entre elles.

Selon l'invention, chaque pli de renfort 103 est composé d'une préforme 103 textile composite tissée.

Cette préforme 103 textile composite tissée est formée d'une armure obtenue par l'assemblage de plusieurs fibres de chaîne 104 circonférentielles décrivant une trajectoire autour dudit orifice d'assemblage 101 et de fibres de trame 105 s'étendant radialement par rapport au centre ou axe central passant par le centre de l'orifice d'assemblage 101.

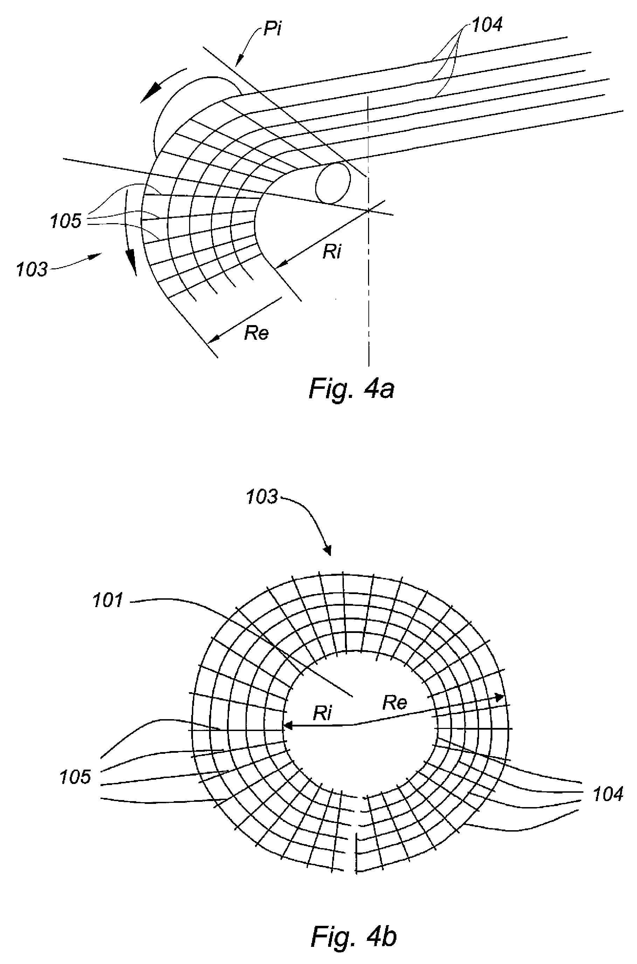

Dans une premier mode de réalisation, cette préforme composite tissée 103 est une couronne annulaire, comme illustré sur les figures 4a et 4b.

Dans ce premier cas, la préforme tissée 103 est formée d'une armure obtenue par l'assemblage de fils de chaîne 104 circulaires et de fils de trame 105 radiaux s'étendant radialement par rapport au centre ou axe central de la préforme 103. Lors de la réalisation de la préforme, les fils de trames 105 sont entrelacés avec les fils de chaîne 104, sur métier à tisser, avec tout motif de tissage souhaité. Le dispositif d'appel des fils de chaîne tel que par exemple représenté à la figure 4a par un rouleau conique, procure la disposition en disque du tissage en aval du point de d'insertion Pi des trames entre les rayons Ri et Re.

Grâce à la présence de plis de renfort 103 sous forme de préforme textile composite tissée, on offre une bonne résistance en matage de l'empilement de plis dans la zone de bord de l'orifice d'assemblage 101 de la pièce 100 d'une part, et d'autre part, aux sollicitations de traction-compression-flexion exercées lors de l'assemblage de la pièce avec un élément de type fixation, axe ou autre.

Les structures de tissage qui proposent des fibres de renfort radialement à l'axe de l'orifice d'assemblage 101 améliorent la tenue de matage de la pièce concernée, permettant de limiter la section et la hauteur de l'axe pour un même effort transmis, et permettant donc de réduire l'épaisseur et la masse de la pièce ainsi renforcée.

Les structures de tissages proposant des fibres disposées circonférenciellement à l'orifice, permettent d'améliorer la tenue de ligament de l'empilement autour de l'orifice d'assemblage 101.

En outre, l'empilement entre des plis de renforts 103 avec des plis de zone courante 102, les dimensions et formes des différents plis de renforts 103, permettent de transférer harmonieusement les efforts depuis la zone de trou à l'ensemble de la pièce, sans créer de zone de changement brutal de structure, conférant ainsi à la pièce un comportement optimal.

On améliore ainsi la tenue mécanique de l'ensemble d'empilement, notamment sur la circonférence de l'orifice d'assemblage 101 de la pièce structurale 100.

Cet avantage des plis de renforts 103 à proximité de l'orifice 101, permet de réduire l'épaisseur total de renfort fibreux nécessaire en bord de trou pour supporter les efforts, et permet de limiter aussi la dimension de ligament autour de l'orifice 101, et permet donc de réduire significativement la masse de la pièce, ainsi que l'épaisseur de la zone de trou, permettant alors de réduire la longueur de l'axe d'assemblage. Il est ainsi possible pour un matériel aéronautique de réduire de 10 à 30% la masse fonctionnelle nécessaire dans le cas d'un orifice avec axe d'assemblage.

On accroit encore avantageusement cet objectif en mettant en oeuvre différentes répartitions des fibres de chaînes et de fibres de trames dans la préforme 103 selon l'invention, et différents empilements entre les plis courants 102 et les plis de renfort 103, tel qui va être expliqué ci-après.

Plusieurs variantes de constructions pourront être utilisées indépendamment ou en combinaison.

La figure 4b présente un premier mode de réalisation de pli de renfort 103. On peut voir que le ratio entre chaîne circonférentielles et trames radiales d'un pli de renfort 103, peut évoluer, pour un motif donné en fonction du rayon. Soit une disposition uniforme des fibres de chaînes 104, telles que N fibres par centimètre de large de la préforme tissée 103. Soit d'autre part des rouleaux et les chaînes disposées de telle manière que avec la rotation du rouleau conique d'appel du tissage, les fibres de chaîne circonférentielles 104, s'inscrivent suivant un disque entre un rayon Ri et Re. On peut fixer l'avance de l'appel de chaîne, de façon à ce que le long du rayon Ri on trouve également N fibres de trames par centimètre curviligne. Ces mêmes fibres s'étendant radialement, on observe le long du rayon Re, un nombre Ne de fibres de trame par cm inversement porportionnel au rapport des rayons : Ne = N × (Ri / Re).

Dans un premier ensemble de variantes de réalisation de préforme 103, on introduit avantageusement des variations relatives aux fibres de chaînes, permettant de faire varier la proportion de fibres circonférentielles 104 à proximité du rayon extérieur Re de la préforme par rapport au rayon Ri du renfort tissé 103.

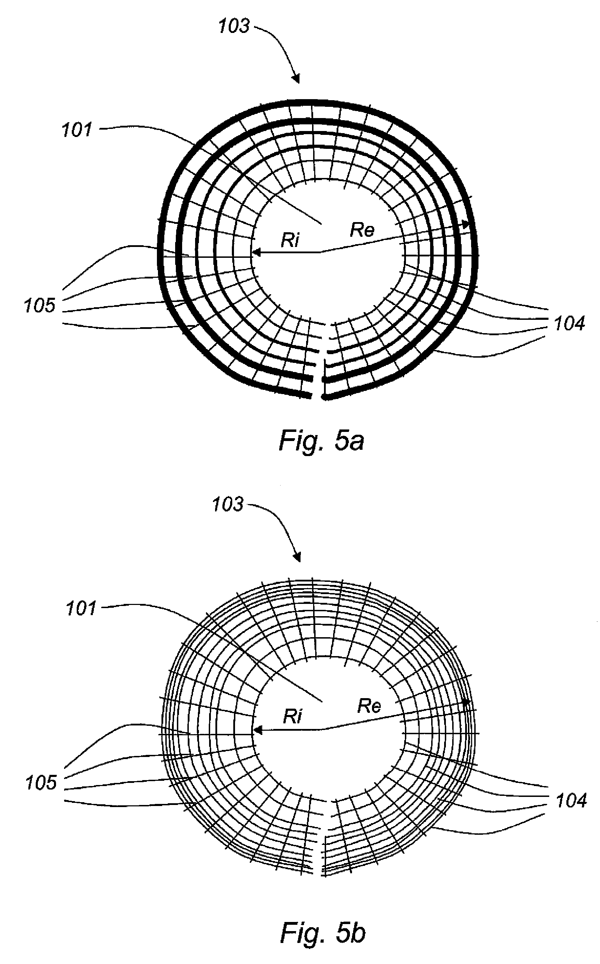

Dans une première variante dont un exemple est représenté à la figure 5a, le titre des fils de chaîne est variable entre différents rayons de la préforme de renfort 103 tissée, le titre d'une fibres est la masse linéique de la mèche de fils utilisée. Ainsi par exemple on installe des fibres de chaîne 104 de plus faible titre à proximité immédiate du rayon Ri, et on installe des fibres de titre plus élevé vers le rayon Re.

Par exemple pour une structure aéronautique, on utilise généralement des fibres de carbone. Les titres de fibres de carbones sont généralement choisis parmi des mèches de 1K, 3K, 6K, 12K, voir 24K, et même plus. Pour des fibres à haute résistance, les titres de ces différentes mèches sont respectivement sensiblement de 67tex, 200tex, 400tex, 800tex, voir 1600 tex (le tex est une unité de titre : 1 tex= 1 g par kilomètre de mèche). On peut par exemple utiliser des fibres de 3K ou 200 tex pour les positions de chaînes proches de Ri, et augmenter progressivement le titre à 12K ou 800 tex pour les positions de chaînes proches de Re. Cette disposition est donnée à titre d'exemple non limitatif.

Dans une autre variante encore dont un exemple est représenté à la figure 5b, on fait varier la densité de fibres de chaîne N le long du rayon entre Ri et Re. Ainsi préférentiellement, on peut avoir une densité faible N de fibres de chaînes, à proximité du rayon Ri, et l'augmenter progressivement au voisinage du rayon Re.

Par exemple, pour les types de fibres indiqués précédemment on peut faire varier la densité de fibres de chaînes, de 2 fils par centimètres , à près de 5 fils par centimètres.

Ainsi, pour un taux d'insertion de trames 105 constant le long du périmètres de la préforme, ces variantes ont pour effet de faire varier le ratio entre masse surfacique de fibres de chaîne ou circonférentielles, et masse surfacique de fibres de trame ou radiales du pli de renfort 103 entre les rayons Ri et Re. Il est courant de tisser selon un ratio chaîne/trame de 30%/70% soit environ 0,4 qui peut être appliqué à proximité du rayon Ri en contact avec l'orifice 101 à environ 70%/30% soit environ 2,3 en contour extérieur du ligament autour de l'orifice. On augmente donc la proportion de fibres radiales en bord de l'orifice 101, augmentant ainsi sa tenue au matage, et on augmente la proportion de fibres circonférentielles en périphérie du ligament autour de l'orifice, augmentant la tenue à l'ouverture ou arrachement dudit ligament.

Dans d'autres variantes de réalisation de préforme 103, on introduit avantageusement des variations relatives aux fibres de trames, permettant de disposer de plus ou moins de densité de trames en bordure d'orifice 101 en fonction de l'orientation angulaire.

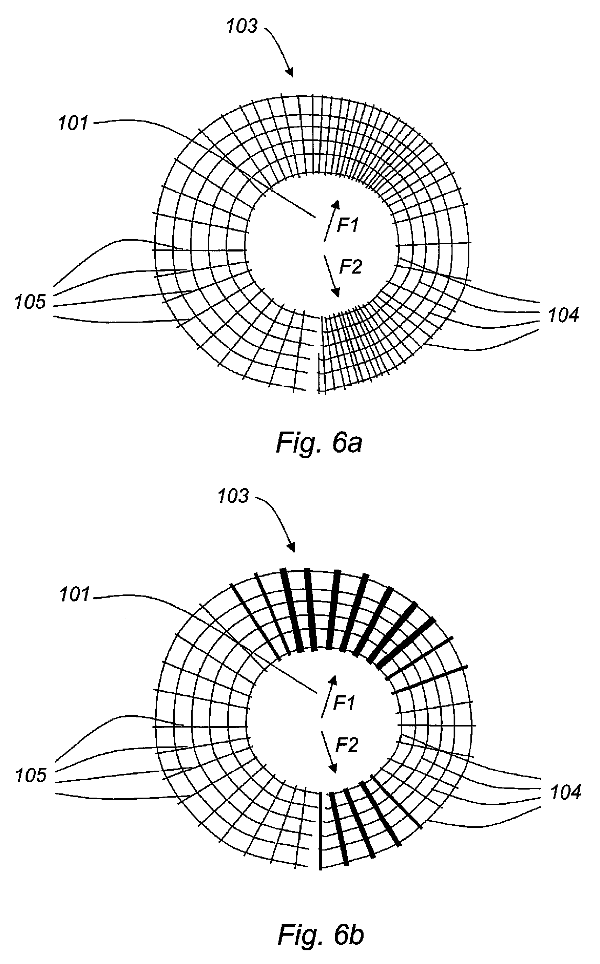

Dans une variante de réalisation de préforme 103 dont un exemple est présenté en figure 6a, on fait évoluer le pas de fibres de trames 105, au fur et à mesure des positions angulaires autour de l'axe de l'orifice 101. Ainsi par exemple, la densité de fibres de trame est choisie maximale dans les secteurs angulaires de la pièce où l'on veut maximiser la tenue en matage en bord de trou, et la densité de fibres de trames est diminuée dans les directions où c'est moins utile. Ainsi dans l'exemple montré à la figure 6a, on suppose que l'orifice peut être soumis à des efforts de matage suivant les deux directions F1 et F2, directions en regard desquelles la densité de fibres de trame est maximisée. De même, la pièce devant subir peu de sollicitations en matage dans les autres directions, on réduit significativement la densité de trames, en dehors des secteurs correspondants à F1 et F2.

Dans une autre variante de réalisation de préforme 103, tel qu'il est présenté à la figure 6b, on contribue à augmenter le ratio massique de trame selon des directions F1 et F2, en augmentant le titre de fil de trame inséré radialement en regard de ces directions. Un titre de fibres de trame plus faible réduisant la part des fibres radiales par rapport au fibres circonférentielles dans le reste du pli de renfort ainsi tissé.

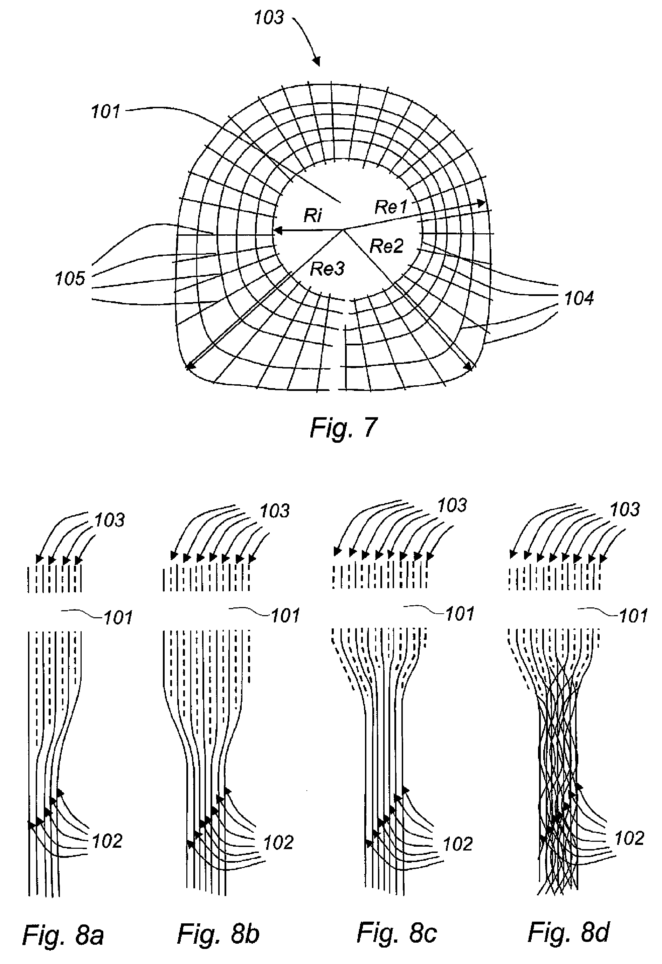

Dans une autre variante encore, comme il est montré à la figure 7, le pas d'espacement des fibres de chaînes 104 est évolutif en fonction de la position angulaire le long de la circonférence du pli de renfort 103 et de la circonférence autour de l'orifice 101. Ainsi, notamment préférentiellement, pour un pli de renfort de rayon Ri, le rayon extérieur , évolue au long de la circonférence entre au moins deux valeurs Re1 et Re2, voir Re1 et Re3. Cette propriété de la préforme 103 peut être obtenue par un dispositif prévu sur le métier à tisser de peigne variable ayant pour effet, par réglages successifs à différentes positions d'insertions de trames , d'espacer plus ou moins les fibres de chaînes circonférentielles entre elles. De tels dispositifs permettent de modifier la largeur d'un tissage dans une proportion pouvant aller de 1 à 3.

Cette disposition particulière du pli de renfort 103 étend la disposition des fibres de chaînes circonférentielles. Ainsi le pli de renfort 103, n'est plus un disque de largeur constante, mais de largeur variable.

Cette particularité du pli de renfort 103, permet par exemple d'étendre les fibres circonférentielles sensiblement parallèlement au sens des efforts s'exerçant sur l'orifice 101 et de les distribuer sur une plus grande surface aux plis courants 102 de la pièce.

Pour toutes ces variantes de préformes de plis de renfort 103, l'armure de tissage peut être uniforme sur l'ensemble du pli, ou variable, en fonction des dispositions des titres, des différentes fibres de chaînes circonférentielles et de trames radiales, afin de conserver à la préforme une bonne tenue. Les différents motifs connus tels que toile, sergés, satin, peuvent être utilisés.

De même divers types de fibres peuvent être utilisées exclusivement ou en combinaison.

Par exemple, pour les fibres de chaînes ou circonférentielles, notamment lorsque le rayon Ri est faible c'est-à-dire de l'ordre de 15 à 30 mm, il peut être préférable d'utiliser des fibres retordues ou « twistées », afin que l'ensemble des filaments coucourrent de façon la plus uniforme possible aux efforts criconférentiels.

Les fibres usuellement employées pour les matériaux composites structuraux pourront être utilisées telles que fibres de verre, fibres de carbone, fibres d'aramide, etc...

L'ensemble de ces variantes de préformes de plis de renforts 103 sont utilisées seules ou en combinaison pour chaque pli de renfort 103 formant le drapage de la pièce 100 avec un orifice 101.

Par ailleurs, dans d'autres variantes de réalisation non exclusives des précédentes, chaque pli de renfort 103 peut s'étendre suivant un secteur angulaire plus ou moins important autour de l'orifice 101 ou suivant une forme spirale ou hélicoïde.

Lorsque la préforme tissée 103 s'étend angulairement de moins de 360° [deg.], on optimise la tenue du ligament par rapport à la tenue de matage de la pièce 100.

Dans une variante de configuration du pli de renfort 103, celui-ci décrit un tour complet, soit 360°.

Dans une variante, les fibres radiales 105, sont tissées jusqu'à l'extrémité des fibres circonférentielles, le maintien du tissage à la bordure de du tissage est obtenu par différents éléments accessoires, tels que des particules ou filaments de matériaux fusibles qui réalisent une adhésion locale des fibres radiales et circonférentielles.

Dans une autre variante, les fibres circonférentielles 104 d'au moins une des extrémités du pli de renfort 103, décrivent un peu plus que 360° venant alors recouvrir l'extrémité opposée du pli de renfort, assurant une continuité circonférentielle de tenue mécanique du pli de renfort.

Dans une encore une autre variante, le pli de renfort 103, ne s'étend que sur un secteur angulaire partiel au moins supérieur aux 180° de ligament. Notamment si la pièce est principalement soumise à des sollicitations de traction via l'orifice 101, l'amélioration de structure concerne principalement le ligament extérieur.

Le pli de renfort 103 selon une combinaison des variantes précédentes est utilisé au sein de l'empilement des couches de fibres de la pièce 100.

Dans une première configuration d'empilement, on dispose alternativement un pli de fibres de courantes 102 et un pli de renfort 103.

En fonction de l'épaisseur totale requise, les premier et dernier plis de l'empilement peuvent être, pris individuellement, soit un pli courant 102, soit un pli de renfort 103.

Dans une variante, plusieurs plis de renfort 103 sont insérés à différentes épaisseurs entre différents plis courants 102, et au moins un de ces plis 103 est différent d'un autre.

Dans une variante notamment, les contours extérieurs des différents plis 103, sont plus ou moins étendus. Ainsi, l'augmentation d'épaisseur de la pièce 100 au voisinage de l'orifice 101 est progressive, ce qui permet aux plis courants 102, de mieux supporter les efforts. En fonction de la difficulté de drapage, et de compactage, des matériaux constitutifs des plis courants 102, des architectures de plis de renfort 103, il est possible d'organiser la décroissance des étendues de plis 103 de façon monotone, du milieu de l'épaisseur vers les surfaces, ou d'une surface vers l'autre, ou encore alternativement selon différentes séquences.

Les figures 8a, à 8d, présentent les vues en coupe d'exemples de séquences d'empilement de plis 102 et 103, et différentes variantes de plis de renfort 103 correspondant à des coupes selon le plan AA défini à la figure 3:
- la figure 8a concerne un exemple d'empilement de plis courants 102 2D quelconques, alternés régulièrement de plis de renforts 103; l'étendue des plis 103, décroit d'une face à l'autre de la pièce, facilitant le drapage à plat d'une telle pièce;
- la figure 8b concerne un exemple d'empilement de plis courants 102 2D quelconques, alternés de plis de renforts 103; l'étendue des plis 103 évolue de maximum vers le milieu de l'épaisseur à minimum vers les surfaces ;
- la figure 8c concerne un exemple d'empilement de plis courants 102 2D quelconques, alternés de plis de renforts 103, alternés ; l'étendue des plis 103 évolue de minimum vers le milieu de l'épaisseur à maximal vers les surfaces, l'étendue des plis de renfort décroit également côté ligament ;
- la figure 8d montre un exemple de séquence d'empilement selon le mode de la figure 8c, pour lequel les plis courants 102 sont réalisés à partir d'un tissage en interlock ; pour cela, comme il est connu par ailleurs, la preforme 102 en tissage interlock de chaîne selon tout motif d'entrelacement de colonnes de chaînes entre diverses couches de trames est schématiquement représentée par les courbes sinusoïdes, et dans la zone d'insertion des plis de renfort 103, les couches sont déliées, c'est-à-dire que, progressivement, les couches de fibres de chaînes sont rendues indépendantes les unes des autres, par entrelacement indépendant des couches de fibres de trames avec chaque couche de fibres de chaînes, ouvrant ainsi des espaces intercouches permettant l'insertion d'un pli de renfort 103 ;

Ces dispositions sont données à titre d'exemples non limitatifs, d'autres dispositions de séquence d'empilement peuvent être envisagées, de même que les choix des tissages pour les plis courants 102, et la mise en oeuvre sous différentes variantes d'architectures et de dimensions des plis de renforts 103.

Dans un mode de réalisation non illustré, chaque pli de renfort 103 peut être lui même renforcé par des fibres de renforts supplémentaires en Z.

Dans une variante, au moins un des plis de renfort 103 et au moins un pli de renfort 102, sont partiellement liés par un renfort dans le sens Z ou sensiblement prependiculairement au plan de drapage des plis 102 et 103. Préférentiellement la majorité des plis 102, et 103 sont liés par un renfort dans le sens Z. Ce renforcement peut être réalisé, par une technique dit de Z-pinning, ou de tufting, ou d'aiguilletage consistant à piquer des fibres de même nature ou de nature différentes entre les couches de fibres, augmentant ainsi la résistance au délaminage des couches entre elles et retardant la propagation du délaminage entre couches qui conduit à la ruine totale de la pièce.

Toutes les variantes précédentes de plis de renforts 103, s'appliquent aussi bien avec des empilements de plis courants 102, réalisés à l'aide de tissus ou de nappes 2D ou de préformes multicouches. Pour les préformes multicouches telles que interlock ou matériaux 2D, il convient de délier les couches de fils de chaînes localement sur toutes la zone où l'on veut insérer un pli de renfort 103.

Les différents renforcements particuliers de structure autour d'un orifice tel que décrits précédemment sont généralement destinées à être rapportées sur une autre structure composite.

Il est à noter que la présente invention ne se limite pas à la fabrication de chapes d'assemblage mais s'appliquent au contraire à toute pièce structurale comprenant un orifice d'assemblage.

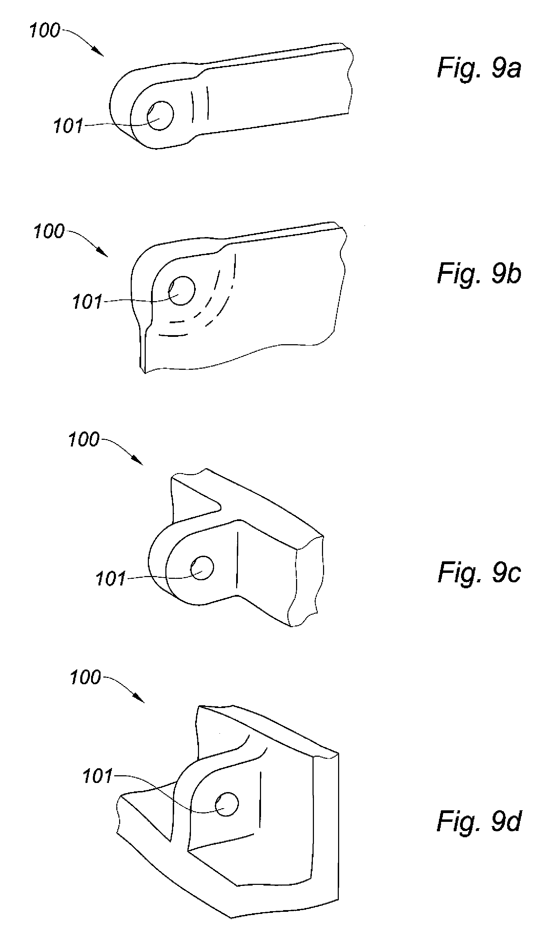

Sur les figures 9a à 9d, on a illustré plusieurs formes de chapes 100 en matériau composite présentant un orifice d'assemblage 101 pouvant être formées par des pièces 100 structurales en matériau composite selon l'invention.

On peut, ainsi, citer une chape 100 simple droite illustrée sur la figure 9a, une chape 100 dite en angle illustrée sur la figure 9b, une chape 100 dite en Té dans laquelle l'orifice d'assemblage 101 est ménagé sur le pied du Té (illustrée sur la figure 9c) et une chape 100 dite en équerre formée d'une pièce en L dans la concavité de laquelle est ménagée une paroi transversale munie de l'orifice d'assemblage 101 (illustrée sur la figure 9d).

La chape de la figure 9a est également représentée sur la figure 3 dans laquelle on peut observer un pli de renfort 103 tissé composite sur la circonférence externe de l'orifice d'assemblage 101.

Un procédé de réalisation d'une pièce structurale 100 en matériau composite selon la présente invention est le suivant.

Il comprend, principalement, les étapes suivantes :
- à l'étape 200 illustrée notamment figure 4a, constituer le tissage du matériau des plis de renfort 103 et les découper sous forme d'une ou de préformes textiles tissées telles qu'illustré notamment aux figures 4b, 5a, 5b, 6a, 6b, 7, et selon une combinaison de variante décrite précédemment,
- à l'étape 201 illustrée notamment figure 1, draper au moins une couche de fibres courantes 102 et au moins un pli de renfort 103 obtenu à l'étape précédente et répéter les opérations de drapage de couches 102 et 103, aux dimensions et arrangements voulus en fonction de la pièce telles qu'illustrée par exemple aux figures 9a à 9d,
- à l'étape 202, consolider l'empilement obtenu à l'étape précédente pour obtenir la pièce structurale 100 en noyant les fibres avec de la résine selon un procédé de la famille des procédés LCM (liquide composite molding) donnant une structure en composites tel qu'illustré à la figure 2a.
- A l'étape 203, procéder à l'usinage de la pièce, par tout procédé connu en soi, incluant notamment, le détourage extérieur de la pièce et si nécessaire autour de l'orifice, le perçage et/ou l'alésage de l'orifice 101, tel qu'illustré à la figure 2b, mais également éventuellement le surfaçage des faces extérieures de la pièces, et tous autres usinages nécessaires

En référence à la figure 4a ou 4b notamment, dans le cas d'une variante de réalisation de préforme tissée décrivant une trajectoire de spirale, le tissage de la préforme 103 peut être réalisé en appelant les fibres de chaîne 104 de rouleaux d'appel conique.

L'appel des fibres de chaînes étant différentiel entre l'intérieur et l'extérieure de la préforme 103, la préforme 103 formée prend la forme d'une spirale. Chaque pli de préforme de renfort 103, est coupée dans ladite spirale pour réaliser le secteur angulaire du renfort voulu, avec les terminaisons voulues.

Ces fibres de chaîne 104 sont tissées aux fibres de trame 105. Suivant le type de tissage choisi pour la préforme 103, les fibres de trame 105 peuvent être insérés par exemple au point Pi illustré à la figure 4a, par tout moyen connu : on peut citer l'insertion à l'aide d'une lance, d'une navette ou à l'aiguille.

Le pli de renfort 103 obtenu est formé de fibres de chaîne 104 spiralés et des fibres de trame 105 radiaux .

Dans l'étape suivante de drapage, en référence à l'exemple de la figure 1, on place alternativement deux couches de plis 102 courants et deux plis 103 de renfort les uns après les autres dans un outil de moulage.

Les plis de renforts sont mis en place dans la zone de l'orifice d'assemblage 101 de la pièce structurale 100 devant être formée.

Une fois la mise en place de l'empilement réalisé, on ferme l'outil de moulage et on injecte sous pression à l'intérieur de la résine polymérisable laquelle va alors remplir les interstices de l'empilement.

On soumet l'outil de moulage à une élévation de température permettant la polymérisation de la résine et son durcissement.

C'est l'étape de consolidation 202 de l'empilement.

Ce procédé est connu sous le nom de procédé "RTM" (de l'anglais Resin transfert Molding).

Bien entendu, en fonction des configurations d'empilements de plis courants 102 et des configurations géométriques, de tissage et d'empilement des plis de renforts 103. La géométrie de la pièce et donc de l'outillage peut nécessiter d'être établi d'épaisseurs variables tout autour du trou. De même, différentes variantes de procédés peuvent être envisagées, on peut citer à titre d'exemple non limitatif, le VARTM, le CRTM, l'injection flexible.

Dans le cas de la fabrication d'une chape d'assemblage telles que celles illustrées sur les figures 9a à 9d, on réalise ensuite une étape 203 de détourage au moyen d'un outil approprié pour former la forme de chape, ainsi qu'un perçage voir alésage pour obtenir l'orifice d'assemblage 101 de la pièce structurale 100 élaborée, comme illustré sur la figure 2a.

Bien entendu, diverses modifications peuvent être apportées par l'homme du métier à l'invention qui vient d'être décrite, uniquement à titre d'exemples non limitatifs.

## Revendications

1. Pièce structurale (100) en matériau composite comprenant au moins un orifice (101) d'assemblage, ladite pièce étant composée d'un empilement de plis de fibres, comprenant au moins une couche (102) de plis de fibres courantes unidirectionnelles ou tissées et au moins un pli de renfort (103), **caractérisée en ce que** ce pli de renfort (103) est composé d'une préforme textile composite tissée formé d'une armure obtenue par l'assemblage de plusieurs fibres de chaîne (104) circonférentielles décrivant une trajectoire autour dudit orifice d'assemblage (101) et de fibres de trame (105) s'étendant radialement par rapport au centre dudit orifice (101).

2. Pièce structurale selon la revendication 1, **caractérisée en ce que** la préforme (103) textile composite tissée décrit une trajectoire spirale ou annulaire, ladite spirale ou ledit anneau respectivement étant sensiblement concentrique par rapport au centre dudit orifice.

3. Pièce structurale selon l'une des revendications 1 à 2, **caractérisée en ce que** le titre des fibres de trames (105) et/ou le pas polaire des fibres de trame sont réguliers sur le secteur angulaire décrit par la préforme (103) textile composite tissée.

4. Pièce structurale selon l'une des revendications 1 à 2, **caractérisée en ce que** le titre des fibres de trames (105) et/ou le pas polaire des fibres de trame sont variables sur le secteur angulaire décrit par la préforme (103) textile composite tissée.

5. Pièce structurale selon l'une des revendications 1 à 4, **caractérisée en ce que** la densité de fibres de chaînes (104) et/ou le titre des fibres de chaînes (104) sont réguliers entre les diamètres extérieur et intérieur de la préforme textile composite tissée.

6. Pièce structurale selon l'une des revendications 1 à 4, **caractérisée en ce que** la densité de fibres de chaînes (104) et/ou le titre des fibres de chaînes (104) sont variables entre les diamètres extérieur et intérieur de la préforme textile composite tissée.

7. Pièce structurale selon l'une des revendications 1 à 6, **caractérisée en ce que** la largeur d'un pli de renfort (103), est variable sur l'ensemble du secteur angulaire décrit par la préforme.

8. Pièce structurale selon l'une des revendications 1 à 7, **caractérisée en ce que** au moins un pli de renfort (103) est agencé sur l'épaisseur de la pièce structurale entre deux couches (102) de plis de fibres courantes.

9. Pièce structurale selon la revendication 1 à 8, **caractérisée en ce que** un ou plusieurs plis de renfort (103) sont agencés sur l'épaisseur de la pièce structurale (100) sur une ou plusieurs couches (102) de plis de fibres courantes, formant les faces externe et/ou interne de l'empilement.

10. Pièce structurale selon la revendication 1 à 9, **caractérisée en ce que** les plis de renfort (103) agencés sur l'épaisseur de la pièce structurale sont identiques entre eux.

11. Pièce structurale selon l'une des revendications 8 à 10, **caractérisée en ce que** les plis de renforts (103) ont une étendue variable d'une couche à l'autre.

12. Pièce structurale selon l'une quelconque des revendications 1 à 11, **caractérisée en ce qu'**au moins une préforme (103) textile composite tissée formant un pli de renfort comprend un orifice (103a) destiné à être placé au droit de l'orifice d'assemblage de la pièce.

13. Pièce structurale selon l'une des revendications précédentes **caractérisée en ce que** au moins un pli de renfort (103) et un pli courant (102) sont renforcés entre eux par des renforts en Z.

14. Pièce structurale selon l'une des revendications 1 à 13, **caractérisée en ce qu'**elle forme une chape (100) comportant un orifice (101) destiné à l'assemblage.

15. Procédé de réalisation d'une pièce structurale (100) en matériau composite comprenant au moins un orifice d'assemblage définie selon l'une des revendications 1 à 14, ledit procédé comprenant une étape (201) de drapage d'un empilement de plis de fibres, une étape de consolidation (202) de l'empilement visant à solidariser les fibres des différents plis par polymérisation d'une résine pour obtenir ladite pièce dans lequel pendant l'étape de drapage (201) de l'empilement de plis, on dépose au moins une couche de plis de fibres unidirectionnelles orientées ou tissées et au moins un pli de renfort composé d'une préforme textile composite tissée formé d'une armure obtenue par l'assemblage de plusieurs fibres de chaîne circonférentielles décrivant une trajectoire autour dudit orifice d'assemblage et de fibres de trame s'étendant radialement par rapport au centre dudit orifice.

## Patentansprüche

1. Strukturteil (100) aus Verbundstoff, zumindest eine Montageöffnung (101) umfassend, wobei sich das besagte Teil aus einer Stapelung von Faserlagen zusammensetzt, zumindest eine Schicht (102) aus unidirektionalen oder gewebten Standardfaserlagen umfassend, sowie zumindest eine Verstärkungslage (103), **dadurch gekennzeichnet, dass** sich diese Verstärkungslage (103) aus einem gewebten Verbundgewebevorformling zusammensetzt, und aus einer Bindung gebildet wird, die durch Zusammenfügen mehrerer umlaufender Kettenfasern (104) erhalten wird, die einen Verlauf um die besagte Montageöffnung (101) herum beschreiben, sowie von Schussfasern (105), die sich im Verhältnis zur Mitte der besagten Öffnung (101) radial erstrecken.

2. Strukturteil nach Anspruch 1, **dadurch gekennzeichnet, dass** der gewebte Verbundgewebevorformling (103) einen spiralförmigen oder ringförmigen Verlauf beschreibt, wobei die besagte Spirale oder der besagte Ring jeweils im Wesentlichen konzentrisch im Verhältnis zur Mitte der besagten Öffnung ist.

3. Strukturteil nach einem der Ansprüche 1 bis 2, **dadurch gekennzeichnet, dass** der Titer der Schussfasern (105) und/oder die Polteilung der Schussfasern im Winkelbereich, der vom gewebten Verbundgewebevorformling (103) beschrieben wird, regelmäßig sind.

4. Strukturteil nach einem der Ansprüche 1 bis 2, **dadurch gekennzeichnet, dass** der Titer der Schussfasern (105) und/oder die Polteilung der Schussfasern im Winkelbereich, der vom gewebten Verbundgewebevorformling (103) beschrieben wird, variabel sind.

5. Strukturteil nach einem der Ansprüche 1 bis 4, **dadurch gekennzeichnet, dass** die Dichte der Kettenfasern (104) und/oder der Titer der Kettenfasern (104) zwischen den Außen- und Innendurchmessern des gewebten Verbundgewebevorformlings regelmäßig sind.

6. Strukturteil nach einem der Ansprüche 1 bis 4, **dadurch gekennzeichnet, dass** die Dichte der Kettenfasern (104) und/oder der Titer der Kettenfasern (104) zwischen den Außen- und Innendurchmessern des gewebten Verbundgewebevorformlings variabel sind.

7. Strukturteil nach einem der Ansprüche 1 bis 6, **dadurch gekennzeichnet, dass** die Breite einer Verstärkungslage (103) im gesamten Winkelsektor, der vom Vorformling beschrieben wird, variabel ist.

8. Strukturteil nach einem der Ansprüche 1 bis 7, **dadurch gekennzeichnet, dass** zumindest eine Verstärkungslage (103) auf der Stärke des Strukturteils zwischen zwei Schichten (102) aus Standardfaserlagen angeordnet ist.

9. Strukturteil nach Anspruch 1 bis 8, **dadurch gekennzeichnet, dass** eine oder mehrere Verstärkungslagen (103) auf der Stärke des Strukturteils (100) auf einer oder mehreren Schichten (102) an Standardfaserlagen angeordnet sind, welche die Außenseite und/oder die Innenseite der Stapelung bilden.

10. Strukturteil nach Anspruch 1 bis 9, **dadurch gekennzeichnet, dass** die Verstärkungslagen (103), die auf der Stärke des Strukturteils angeordnet sind, untereinander identisch sind.

11. Strukturteil nach einem der Ansprüche 8 bis 10, **dadurch gekennzeichnet, dass** die Verstärkungslagen (103) von einer Schicht zur anderen eine variable Ausdehnung aufweisen.

12. Strukturteil nach einem der Ansprüche 1 bis 11, **dadurch gekennzeichnet, dass** zumindest ein gewebter Verbundgewebevorformling (103), der eine Verstärkungslage bildet, eine Öffnung (103a) umfasst, die dazu bestimmt ist, auf Höhe der Montageöffnung des Teils platziert zu werden.

13. Strukturteil nach einem der vorherigen Ansprüche, **dadurch gekennzeichnet, dass** zumindest eine Verstärkungslage (103) und eine Standardlage (102) untereinander durch Z-förmige Verstärkungen verstärkt sind.

14. Strukturteil nach einem der Ansprüche 1 bis 13, **dadurch gekennzeichnet, dass** es eine Isolierschicht (100), eine Öffnung (101) umfassend, bildet, die zur Montage bestimmt ist.

15. Verfahren zum Herstellen eines Strukturteils (100) aus Verbundstoff, zumindest eine Montageöffnung nach einem der Ansprüche 1 bis 14 umfassend, wobei das besagte Verfahren einen Schritt (201) zum Drapieren einer Stapelung von Faserlagen umfasst, einen Schritt zum Konsolidieren (202) der Stapelung, der darauf abzielt, die Fasern der verschiedenen Stapelungen durch Polymerisieren eines Harzes fest miteinander zu verbinden, um das besagte Teil zu erhalten, wobei man während des Schrittes zum Drapieren (201) der Stapelung von Lagen zumindest eine Schicht aus unidirektionalen oder gewebten Standardfaserlagen und zumindest eine Verstärkungslage bestehend aus einem gewebten Verbundgewebevorformling aufbringt, der aus einer Bindung gebildet wird, die man aus dem Zusammenfügen mehrerer umlaufender Kettenfasern erhält, die einen Verlauf um die besagte Montageöffnung herum beschreiben, sowie von Schussfasern, die sich im Verhältnis zur Mitte der besagten Öffnung radial erstrecken.

## Claims

1. A structural part (100) made of composite material comprising at least one assembly orifice (101), said part being composed of a stack of plies of fibers, comprising at least one layer (102) of plies of unidirectional or woven regular fibers and at least one reinforcing ply (103), **characterized in that** this reinforcement ply (103) is composed of a woven composite textile preform formed of a weave obtained by assembling a plurality of circumferential warp fibers (104) describing a path about said assembly orifice (101) and weft fibers (105) radially extending relative to the center of said orifice (101).

2. The structural part according to claim 1, **characterized in that** the woven composite textile preform (103) describes a spiral or annular path, said spiral or said ring respectively being substantially concentric relative to the center of said orifice.

3. The structural part according to any of claims 1 to 2, **characterized in that** the size of the weft fibers (105) and/or the pole pitch of the weft fibers are regular on the angular sector described by the woven composite textile preform (103).

4. The structural part according to any of claims 1 to 2, **characterized in that** the size of the weft fibers (105) and/or the pole pitch of the weft fibers are variable on the angular sector described by the woven composite textile preform (103).

5. The structural part according to any of claims 1 to 4, **characterized in that** the density of warp fibers (104) and/or the size of warp fibers (104) are regular between the outer and inner diameters of the woven composite textile preform.

6. The structural part according to any of claims 1 to 4, **characterized in that** the density of warp fibers (104) and/or the size of warp fibers (104) are variable between the outer and inner diameters of the woven composite textile preform.

7. The structural part according to any of claims 1 to 6, **characterized in that** the width of a reinforcing ply (103) is variable over the whole angular sector described by the preform.

8. The structural part according to any of claims 1 to 7, **characterized in that** at least one reinforcing ply (103) is arranged on the thickness of the structural part between two layers (102) of regular fiber plies.

9. The structural part according to claim 1 to 8, **characterized in that** one or several reinforcing plies (103) are arranged over the thickness of the structural part (100) on one or several layer(s) (102) of regular fiber plies, forming the outer and/or inner faces of the stack.

10. The structural part according to claim 1 to 9, **characterized in that** the reinforcing plies (103) arranged over the thickness of the structural part are identical therebetween.

11. The structural part according to any of claims 8 to 10, **characterized in that** the reinforcing plies (103) have a variable extent from one layer to the other.

12. The structural part according to any one of claims 1 to 11, **characterized in that** at least one woven composite textile preform (103) forming a reinforcing ply comprises an orifice (103a) intended to be placed to the right of the assembly orifice of the part.

13. The structural part according to any of the preceding claims **characterized in that** at least one reinforcing ply (103) and a regular ply (102) are reinforced therebtween by Z-shaped reinforcements.

14. The structural part according to any of claims 1 to 13, **characterized in that** it forms a clevis (100) including an orifice (101) intended for the assembly.

15. A method for making a structural part (100) made of composite material comprising at least one assembly orifice defined according to any of claims 1 to 14, said method comprising a step (201) for draping a stack of fiber plies, a step (202) for consolidating the stack aiming to secure the fibers of the different plies by polymerization of a resin in order to obtain said part in which, during the step (201) for draping the stack of plies, are deposited at least one layer of oriented or woven unidirectional plies of fibers and at least one reinforcing ply composed of a woven composite textile preform formed of a weave obtained by the assembly of several circumferential warp fibers describing a path around said assembly orifice and of weft fibers radially extending relative to the center of said orifice.
